**Europäisches Patentamt**

**European Patent Office**

**Office européen des brevets**

(19)

(11) Veröffentlichungsnummer: **0 014 987**
**B1**

# (12) EUROPÄISCHE PATENTSCHRIFT

(45) Veröffentlichungstag der Patentschrift:
06.10.82

(21) Anmeldenummer: **80100815.2**

(22) Anmeldetag: **18.02.80**

(51) int. Cl.³: **B 01 D 46/04**

(54) Filtersteueranlage zur zyklischen Gegenspülung membranventilbetätigter Filterschläuche in einer Getreidemühlenanlage.

(30) Priorität: **19.02.79 DE 2906353**

(43) Veröffentlichungstag der Anmeidung:
**03.09.80 Patentblatt 80/18**

(45) Bekanntmachung des Hinweises auf die Patenterteilung:
**06.10.82 Patentblatt 82/40**

(84) Benannte Vertragsstaaten:
**AT BE CH FR IT NL**

(56) Entgegenhaltungen:
**DE-A-2 233 529**
**DE-C-1 407 922**
**FR-A-2 032 619**
**FR-A-2 156 378**
**FR-A-2 156 764**
**FR-A-2 269 363**
**US-A-3 390 512**
**US-A-3 948 623**

(73) Patentinhaber: **Gebrüder Bühler AG, CH-9240 Uzwil (CH)**

(72) Erfinder: **Oetiker, Hans, Sahlistrasse 4, CH-9000 St.
Gallen (CH)**
Erfinder: **Kummer, Emanuel, Bachstrasse 40,
CH-9202 Gossau (CH)**
Erfinder: **Rusterholz, Kurt, Obersee 78, CH-8645 Jona
(CH)**
Erfinder: **Gaemperle, Herman, Unterweg 3,
CH-9552 Bronschhofen (CH)**

(74) Vertreter: **Von Samson-Himmelstjerna, Friedrich R.,
Dipl.-Phys. et al, Patentanwälte GEYER, HAGEMANN &
PARTNER Postfach 860329, D-8000 München 86 (DE)**

## Filtersteueranlage zur zyklischen Gegenspülung membranventilbetätigter Filterschläuche in einer Getreidemühlenanlage

Die Erfindung bezieht sich auf eine Filtersteueranlage zur Steuerung der Steuerparameter, Spülstoßdauer und Spülstoßabstand und gegebenenfalls weiterer Steuerparameter einer zyklischen Gegenspülung von Filterschläuchen in einer Getreidemühlenanlage, welchen Filterschläuchen zur Gegenspülung jeweils ein fluidisch betätigbares Membranventil zugeordnet ist, mit einer Schaltung zur elektronischen Vorgabe von Taktsignalen und einer der elektronischen Schaltung nachgeschalteten, von den Taktsignalen steuerbaren und ein Entlüftungsventil aufweisenden ersten elektromechanischen Wandlereinheit zur Steuerung der Spülstoßdauer.

Die gattungsgemäße Filtersteueranlage ist aus der DE-C-1 407 922 bekannt. Bei der Reinigung von Staubluft in Getreidemühlenanlagen setzt sich mehr und mehr die Verwendung von Filterschläuchen durch. In neuzeitigen Anlagen wird auch verlangt, daß der Filter ohne Unterbrechung in Betrieb gehalten werden kann. Dies bedingt aber die automatische Abreinigung der Filterschläuche. Hierbei hat sich das sogenannte Filterspülverfahren gemäß der obengenannten DE-C-1 407 922 weitgehend durchgesetzt. Die Staubluft durchdringt dabei von außen die Filterschläuche und wird am oberen Austrittsende der Filterschläuche als gereinigte Luft gesammelt und je nach Anlage wieder in den Betrieb oder ins Freie abgegeben. Zur zyklischen Ansteuerung der Membranventile ist hierbei ein als Drehschalter ausgebildetes elektrisches Schaltaggregat vorgesehen, das über eine erste elektro-mechanische Wandlereinheit, in diesem Fall eine Gruppe elektro-pneumatischer Ventile, die Betätigung der Membranventile steuert. Der Drehschalter weist auf einem Kreisring und im Abstand voneinander angeordnete Festkontakte und einen über die Festkontakte streichenden Drehkontakt auf. Die Festkontakte sind mit der einen Klemme und der Drehkontakt mit der anderen Klemme je eines elektro-pneumatischen Ventils verbunden. Der Drehkontakt wird von einem Motor angetrieben. Hierdurch werden insoweit elektrische Taktsignale vorgegeben, als der Drehkontakt in fest vorgegebenen Zeitabständen nacheinander über die Festkontakte streicht. Infolge der festen Verbindung der beiden Klemmen der elektro-pneumatischen Ventile mit den Festkontakten bzw. dem Drehkontakt sowie infolge des geometrischen Abstandes zwischen den Festkontakten wird sichergestellt, daß nach Betätigung des einen Membranventils das innerhalb des Gegenspülzyklus nachfolgende Membranventil automatisch betätigt wird. Die angegebene Schaltung des elektrischen Schaltaggregats führt dazu, daß die dem Gegenspülzyklus zuordenbaren Steuerparameter, in diesem Fall der Spülstoßabstand und die Spülstoßlänge, stets fest miteinander gekoppelt und nur gemeinsam, genauer in einem konstanten Verhältnis zueinander, veränderbar sind. Aus der DE-C-1 407 922 ist es auch bekannt, anstelle des elektrischen Drehschalters mehrere rein elektronische, keine mechanisch bewegten Teile aufweisende Folgeschalter, z. B. Transistoren, vorzusehen. Auch mittels der elektronischen Folgeschalter sind die Steuerparameter stets nur in einem konstanten Verhältnis zueinander veränderbar.

Im übrigen hat die elektronische Vorgabe von Taktsignalen den Vorteil, daß sie äußerst preisgünstig durchführbar ist, da hierzu jede elektronische Uhr, beispielsweise ein Schwingquarz einsetzbar ist. Hinzu kommt die der Elektronik eigene Präzision der Steuerung. Bei der bekannten Vorrichtung hat ferner die angegebene Verknüpfung der Schaltung zur elektronischen Vorgabe von Taktsignalen — zur zentralen Steuerung des Verfahrensablaufes mit den nachgeschalteten fluidischen Steuermitteln zur fluidischen Betätigung der Membranventile — den Vorteil, daß zur Erzeugung der elektrischen Taktsignale nur äußerst wenig Fremdenergie in Form von Strom benötigt wird, diejenigen Arbeitselemente jedoch, welche die Hauptenergie verbrauchen, nämlich die Membranventile, mittels der ohnehin in der Getreidemühle vorhandenen Druckluft betätigbar sind.

Auch aus der FR-A-2 156 378 ist eine Vorrichtung zur zyklischen Gegenspülung von Filterschläuchen bekannt. Hierbei wird zur Vereinfachung der Vorrichtung eine Blasdüse mittels eines Linearmotors nacheinander vor die Reinluft-Austrittsöffnungen der Filterschläuche gefahren, und zwar längs eines Preßluft-Zuführrohres. Zwischen einen Kompressor und den Eingang des Preßluft-Zuführrohres ist als erste elektro-mechanische Wandlereinheit ein Elektromagnetventil geschaltet. Die Vorschubgeschwindigkeit des Linearmotors und damit der Steuerparameter »Spülstoß-Abstand« ist dadurch steuerbar, daß der Linearmotor über eine Schubstange mit dem Kolben eines Dämpfungszylinders verbunden ist, die beiden Zylinderräume vor und hinter dem Kolben über eine Ausgleichsschaltung miteinander fluidisch verbunden sind und in die Ausgleichsschaltung ein von Hand einstellbarer Schieber zur Steuerung der Fluiddurchflußmenge pro Zeit eingefügt ist. Die Spülstoßdauer dagegen ist nicht steuerbar. Sie beträgt 0,2 bis 0,3 Sekunden.

Im übrigen hat die Verfahrbarkeit der Blasdüse oberhalb der Reinluft-Austrittsöffnungen der Filterschläuche und längs des Druckluft-Zuführrohres den Vorteil, daß als erste elektro-mechanische Wandlereinheit nur ein einziges Elektromagnetventil zum Einleiten des Spülstoßes für sämtliche Filterschläuche erforderlich ist. Taktsignale werden jedoch bei der bekannten Vorrichtung nicht, erst recht nicht elektronisch vorgegeben. Vielmehr weist die bekannte Filtersteueranlage eine Steuerschaltung im Sinne einer echten Folgeschaltung auf, da die Schaltsignale zur Gegenspülung des jeweils folgenden Filterschlauches in Abhängigkeit von der Bewegung des Linearmotors angesteuert werden, nämlich dann, wenn der Linearmotor einen der vorgesehenen Unterbrecherfühler geschaltet hat.

Aus der US-A-3 948 623 ist eine Vorrichtung zur Gegenspülung zylindrischer Filterrohre bekannt. Die bekannte Vorrichtung dient der Filterung staubbeladener Heißluft mit einer Temperatur von ca. 1100°C. Die Gegenspülung erfolgt mit normaler Druckluft, nicht dagegen mit Niederdruckluft. Die Gegenspülung wird bei der bekannten Vorrichtung automatisch dann eingeleitet, wenn die Geschwindigkeit des durch das Filtermedium strömenden Gases um einen bestimmten Mindestwert abfällt. Die Zeitpunkte des Einsatzes der Gegenspülung, und damit die Spülstoßabstände, sind demnach von außen nicht steuerbar, sondern vielmehr vom Verlauf des Filtervorgangs selbst abhängig. Demgemäß werden auch bei dieser bekannten Vorrichtung keine Taktsignale, erst recht nicht elektronische Taktsignale vorgegeben. Im einzelnen sind hierbei zur Gegenspülung in die Filtereinheiten ragende Rohre mit daran vorgesehenen Blasdüsen vorgesehen, wobei die Rohre über einen Antriebsmechanismus um die Längsachse der Filtereinheiten gedreht werden. Eine Steuerung der Spülstoßdauer ist mittels einer Zeitschaltung vorgesehen.

Obwohl in der gattungsgemäßen Filtersteueranlage jeder einzelne Filterschlauch eine verhältnismäßig große Luft- und Staubmenge verarbeiten kann, ist wegen der enormen Belastung sowohl durch die Luft- wie auch durch die Staubmenge eine sehr große Anzahl Filterschläuche notwendig.

Zwei Filtertypen sind heute im Vordergrund.

In Getreidemühlenanlagen und ähnlichen Anlagen wird durch die sehr große Vielzahl der Staubluftquellen das Prinzip der dezentralen Luftreinigung mit verhältnismäßig kleinen Filtereinheiten gefordert und auch angewandt. Diese Filter haben in der Regel 10 bis 50 und in Extremfällen bis 100 einzelne Filterschläuche. In einer Mühle werden vielfach 10 bis 20 solcher Filtereinheiten eingesetzt. Der große Vorteil dieses Systems liegt darin, daß die Luft-Sammelleitungen noch in den Betriebsräumen geführt und ebenso der Filter im Mühlengebäude untergebracht werden kann. Die Plazierung des Filters im Mühlengebäude hat auch den Vorteil, daß Kondensationsprobleme vermieden werden können. Derartige Filter werden häufig als Mühlenfilter bezeichnet.

Der zweite Filtertyp kann als Industriefilter bezeichnet werden. Er findet meistens Anwendung in der chemischen, Kunststoff- oder Zement- und anderen Industrien. Hierbei wird in der Regel die verunreinigte Luft in verhältnismäßig großen Filtereinheiten zentral gesammelt und gereinigt. Diese Filter weisen 100 bis 1000 und teilweise mehr als 1000 Filterschläuche auf.

Die Hauptluft-Sammelleitung weist dabei einen Durchmesser von 1 bis 2 m und mehr auf. Deswegen, aber auch wegen der Filtergröße, muß diese Anlage im Freien aufgestellt werden.

Bei den Mühlenfiltern wird meistens Niederdruckluft von weniger als $2 \times 10^5$ N/m² (2 bar), in der Regel $1,5 \times 10^5$ N/m² (1,5 bar) verwendet. Die Niederdruckluft kann mit Membran- oder Kreiskolbengebläsen ölfrei erzeugt werden. Um bei der Gegenspülung trotz der relativ niedergespannten Spülluft genügend Effizienz zu erhalten, muß jedem einzelnen Filterschlauch ein Gegenspülventil zugeordnet sein. Der Mühlenfilter weist deshalb eine gleiche Anzahl Filterschläuche und Gegenspülventile auf, also zum Beispiel 10 bis 100 Stück. Der Mühlenfilter muß meistens eine große Anzahl einzelner Staubluftquellen sammeln. Vielfach reagieren die einzelnen Luftverbraucher darüber hinaus auch äußerst empfindlich auf Luftmengenschwankungen.

Beim Gegenspülvorgang wird nun nicht nur ein Filterschlauch außer Betrieb gesetzt; vielmehr wird noch eine Menge Energie in Form von Gegenspülluft in das Filtergehäuse eingeblasen. Als Faustregel wird nun angenommen, daß nicht mehr als $1/15$ bis $1/30$ der Filterschläuche gleichzeitig gereinigt werden darf, um Schäden, insbesondere unerwünschte Rückwirkungen auf die Strömungsverhältnisse der Luftverbraucher zu vermeiden. Der Spülvorgang dauert in der Praxis meistens weniger als 1 Sekunde, häufig sogar nur 0,1 bis 0,3 Sekunden. Bei einem Filter mit mehreren, beispielsweise 25 Filterschläuchen, werden je nach Luft- und Staubbelastung zyklisch alle Filterschläuche einzeln in Zeitabständen von 10 bis 60 Sekunden der Gegenspülung unterworfen und dabei gereinigt. Sind alle Filterschläuche gereinigt, beginnt der Zyklus automatisch von vorn.

Ähnlich arbeitet der Industriefilter, nur daß dort meistens eine Anzahl von beispielsweise 10 Filterschläuchen über eine gemeinsame Verteilleitung und ein gemeinsames Ventil beaufschlagt werden. Hat der Filter 200 bis 300 Filterschläuche, müssen auch hier 20 bis 30 Ventile gesteuert werden.

Die Entwicklung der Steuerung auf Spülluftventile und dementsprechend auch die der ganzen Filteranlage hat in den vergangenen Jahrzehnten mehrere Wandlungen durchgemacht. Nachdem mechanische und elektrische Steuerungen schon bekannt waren, wurden bereits zu Beginn der sechziger Jahre elektrischelektronische Steuerungsgeräte von der Anmelderin selbst mit großem Erfolg in aller Welt eingesetzt. Die Anmelderin versuchte dann in jüngerer Zeit einen weiteren Schritt mit der Anwendung einer anderen Gattung von Filtersteueranlagen, nämlich einer rein fluidisch-mechanischen Steuerung gemäß DE-A-2 233 529 —, dies, nachdem die Gattung der elektrisch-mechanischen Filtersteueranlagen seit vielen Jahren eine große Betriebssicherheit anbietet. Eine fluidische Steuerung hat jedoch zwei überzeugende Vorteile. Der Filter kann mit der in ihm schon vorhandenen Energie, nämlich der Druckluft, gesteuert werden. Zudem ist eine fluidische Steuerung explosionssicher, da sie funkenfrei arbeitet.

Beim Mühlenfilter glaubte man — wollte man vom bewährten Prinzip der Einzelschlauchreinigung nicht abgehen —, sozusagen am Ende der Entwicklung zu stehen. Demgemäß sind in jüngster Zeit auch immer mehr Bestrebungen bekanntgeworden, die sogenannten Hochdruck-Industriefilter mit 2 bis 8 bar Druckluft zu Mühlenfiltern zu verkleinern. Da dann theoretisch etwa zehnmal weniger Ventile gebraucht würden, würde auch der benötigte Steueraufwand entsprechend geringer. Dies wiederum würde theoretisch dazu führen, daß ein entsprechend verkleinerter Industriefilter preisgünstiger als der bisherige Mühlenfilter herstellbar wäre.

Der Erfindung liegt die Aufgabe zugrunde, die gattungsgemäße Filtersteueranlage derart zu verbessern, daß sie unter weitgehender Beibehaltung ihrer bisherigen Vorteile besser steuerbar ist.

Diese Aufgabe wird erfindungsgemäß dadurch gelöst, daß der elektronischen Schaltung eine von den Taktsignalen steuerbare zweite elektro-mechanische Wandlereinheit zur Steuerung des Spülstoßabstandes nachgeschaltet ist und die elektro-mechanischen Wandlereinheiten zur voneinander unabhängigen Steuerung der Spülstoßdauer und des Spülstoßabstandes durch die elektronische Schaltung ausgelegt sind.

Die angegebene Lösung hat den Vorteil, daß die Steuerparameter, Spülstoßdauer und Spülstoßabstand, unabhängig voneinander an die jeweiligen Betriebsbedingungen angepaßt werden können. Diese Möglichkeit ist von großem Vorteil, da sich auf Grund von Versuchsreihen der Anmelderin gezeigt hat, daß sich das optimale Verhältnis der Steuerparameter, Spülstoßabstand und Spülstoßdauer, bei einer vorgegebenen Filtersteueranlage in Abhängigkeit von den jeweiligen Betriebsbedingungen ändert. Die angegebene Lösung führt zu einer außerordentlich hohen Betriebssicherheit und Genauigkeit der Steuerung.

Zwar ist aus der bereits genannten DE-A-2 233 529 eine Filtersteueranlage zur zyklischen Gegenspülung von Filterschläuchen mit jeweils zugeordnetem Membranventil bekannt. Die selbsttätige zyklische Ansteuerung der Membranventile wird hierbei aber mittels einer anderen Gattung von Folgesteuerung, nämlich einer rein pneumatisch-mechanischen Folgesteuerung sichergestellt. Die Spülstoßdauer und der Spülstoßabstand sind hierbei über verstellbare Drosseln variierbar, jedoch nicht unabhängig voneinander. Denn die gesamte Folgesteuerung stellt nämlich ein in sich geschlossenes Druckfluidsystem dar, bei welchem bereits die Verstellung einer Drossel sich auf den gesamten Signal- bzw. Fluidfluß im Gesamtsystem auswirkt. Denn das Steuersystem stellt bezüglich des zur Gegenspülung verwendeten Druckfluides sowie der fluidischen Steuersignale ein gekoppeltes Schwingungssystem dar, dessen Eigenfrequenz zur Steuerung ausgenutzt wird. Dies hat zur Folge, daß die Änderung der einen Steuergröße, beispielsweise des Spülstoßabstandes, zwangsläufig auf die anderen Steuergrößen, beispielsweise die Spülstoßdauer, rückgekoppelt wird und damit auch zu deren zwangsläufiger Veränderung führt.

Im übrigen werden in der bekannten pneumatisch-mechanischen Filtersteueranlage Taktsignale nicht vorgegeben. Auch wendet sich diese Gattung der Filtersteueranlagen grundsätzlich von der Verwendung elektronischer oder elektronischer Bauteile ab, insbesondere um eine Explosionsgefahr zu vermeiden.

Eine erhebliche Vereinfachung der Filtersteueranlage ist vorzugsweise dadurch erzielbar, daß die zweite elektro-mechanische Wandlereinheit einen Trommelverteiler aufweist, der bereits grundsätzlich in der DE-A-2 233 529 beschrieben ist. Hierdurch wird der Vorteil erreicht, daß die Steuerung der Ventilmembrane der einzelnen Filterschläuche mit nur einem, vorzugsweise am Eingang des Trommelverteilers angeordneten Entlüftungsventil durchführbar ist.

Um eingangsseitig mit kleinen Querschnitten der fluidischen Steuerleitungen auskommen, gleichzeitig jedoch einen ausreichend starken Spülstoß in die Filterschläuche einleiten zu können, ist vorzugsweise dem Membranventil je ein Vorsteuerventil vorgeschaltet und mit einem Ausgang des Trommelverteilers verbunden. Auch diese Maßnahme ist bereits grundsätzlich in der DE-A-2 233 529 beschrieben.

Die Größe des Trommelverteilers, insbesondere dessen Durchmesser, ist dadurch reduzierbar, daß wenigstens zwei, vorzugsweise drei oder vier Vorsteuerventile mit einem Ausgang des Trommelverteilers verbunden sind.

Die Genauigkeit der Positionierung des Armes des Trommelverteilers bezüglich der Trommelverteilerausgänge wird dadurch erheblich erhöht, daß die zweite elektro-mechanische Wandlereinheit einen den Trommelverteilerarm antreibenden Schrittmotor aufweist, der von der elektronischen Schaltung bzw. Steuereinheit getaktet wird. Hierbei wird dei Erkenntnis ausgenutzt, daß die taktweise Bewegung des Ankers im Schrittmotor durch die ortsfeste Anordnung der Phasenpole des Schrittmotors genau festgelegt wird. Durch die Verbindung zwischen dem Arm des Trommelverteilers und dem Schrittmotor wird quasi die im Schrittmotor vorgegebene Geometrie eindeutig auf die Bewegungsebene des Trommelverteilers abgebildet. Mittels eines geeigneten Über- bzw. Untersetzungsgetriebes zwischen dem Schrittmotor und dem Trommelverteiler läßt sich die Abbildung so vornehmen, daß jeder Statorpol präzise auf einen Ausgang des Trommelverteilers abgebildet wird. Vorzugsweise ist hierbei das Untersetzungsverhältnis des Untersetzungsgetriebes wählbar, damit ein und derselbe Schrittmotor für Trommelverteiler unterschiedlicher Geometrie verwendbar ist.

Schaltungsmäßig besonders einfach ansteuerbar ist ein unipolarer Schrittmotor.

Der Schrittmotor und der Trommelverteiler können dadurch besonders bequem aufeinander einjustiert werden, daß der Schrittmotor und der Trommelverteiler parallelachsig angeordnet sind und der Schrittmotor in einer Ebene senkrecht zu den Achsen, vorzugsweise in einem Winkelbereich von ca. 15°, schwenkbar ist.

Vorzugsweise ist der Trommelverteiler selbst als Schrittmotor ausgestaltet. Hierdurch ist eine weitere Vereinfachung der Filtersteueranlage erzielbar. Denn durch diese Maßnahme fällt die Notwendigkeit eines Untersetzungsgetriebes und einer vorherigen Positionsjustierung des Schrittmotors zum Trommelverteiler fort. Der Anker des Schrittmotors übernimmt hierbei die Funktion des Verteilerarmes im Trommelverteiler; die Orte der Statorpole des Schrittmotors entsprechen hierbei den Orten der Ausgänge des Trommelverteilers. Gerade an dieser Ausführungsform zeigt sich besonders deutlich der Vorteil des gemischten Steuersystems, da die fluidischen Steuergrößen keine Wechselwirkung mit den elektromagnetischen Steuergrößen eingehen und deshalb unmittelbar neben- bzw. übereinander ohne gegenseitige nachteilige Beeinflussung angeordnet werden können.

Gemäß einer weiteren bevorzugten Ausführungsform ist die Drehwelle des Trommelverteilers in Kugellagern geführt, wobei die Kugellager über O-Ringe druckdicht an der Wandung einer Axialbohrung im Trommelverteilerblock anliegen. Durch diese Maßnahme wird der fertigungstechnische Vorteil erreicht, daß die Drehwelle des Trommelverteilers mit Lottersitz in der Axialbohrung des Verteilerblocks angeordnet werden kann, gleichwohl aber eine druckfluiddichte Abdichtung zwischen der Wandung der Axialbohrung und den Kugellagern gewährleistet ist.

Vorzugsweise sind der Schrittmotor, der Trommelverteiler und das Entlüftungsventil zu einer Baueinheit und die elektronische Steuereinheit zu einer anderen Baueinheit zusammengefaßt. Diese Zusammenfassung hat den Vorteil, daß die Teile, die weder eine Bedienung noch eine Wartung notwendig haben, getrennt von denjenigen Einheiten anordenbar sind, die zumindest Einrichtungen zum Bedienen aufweisen. So können beispielsweise der Schrittmotor, der Trommelverteiler und das Entlüftungsventil am Filteroberteil fest montiert, die elektronische Steuereinheit dagegen an einer Gebäudewand auf Bedienungshöhe befestigt sein.

Die elektronische Steuereinheit ist so ausgelegt, daß das Zeitintervall zwischen zwei Betätigungen des Entlüftungsventils und/oder die Dauer der Entlüftungsventilbetätigung unabhängig voneinander veränderbar sind, wobei das Zeitintervall zwischen zwei Ventilbetätigungen vorzugsweise im Bereich von 0,5 s bis 10 min, insbesondere von 2 bis 100 s, und die Dauer der Ventilbetätigung vorzugsweise im Bereich von 30 ms bis 1 s, insbesondere von 30 bis 150 ms einstellbar sind. Durch diese Auslegung der elektronischen Steuereinheit sind die beiden wesentlichen Arbeitsparameter für die Entlüftungsventile wahlweise einstellbar.

Ein besonderer Reinigungseffekt ist dadurch erzielbar, daß das Entlüftungsventil so ausgelegt ist, daß es mittels einer Kette von Impulsen rasch nacheinander mehrmals betätigbar ist. Hierdurch wird eine Art Klopfeffekt auf den Filterschlauch ausgeübt.

Vorzugsweise ist als Entlüftungsventil ein elektro-pneumatisches Ventil vorgesehen. Ein derartiges Ventil hat sich bereits gut bewährt und läßt sich mittels elektronischer Taktimpulse besonders bequem steuern.

Das Entlüftungsventil ist vorzugsweise so geschaltet, daß es im stromlosen Zustand geschlossen ist. Hierdurch wird ein unerwünschter Druckabfall bei Stromausfall vermieden. Ferner ist es von Vorteil, die Filtersteueranlage mit einer Sicherungseinrichtung, welche bei Ausfall der Luftversorgung den elektrisch-elektronischen Teil ausschaltet und/oder ein Alarmsignal abgibt, zu bestücken. Durch diese Maßnahme werden die Sicherheit der Filtersteueranlage weiter erhöht und unerwünschte Rückwirkungen bei Ausfall der Luftversorgung weitestgehend vermieden.

Gemäß einer bevorzugten Ausführungsform der Filtersteueranlage ist die elektro-mechanische Wandlereinheit von einem druckdicht abgeschlossenen und mit einem Inertgas gefüllten Gehäuse umgeben. Hierdurch wird die Filtersteuerung explosionssicher gemacht, so daß sie in dieser Beziehung auch die Vorteile einer rein fluidischen Steuerung bietet. Diese Sicherungsmaßnahme ist mit geringem zusätzlichem Aufwand erzielbar, da eine verhältnismäßig geringe Gasmenge zur fluidischen Steuerung der Membranventile benötigt wird. Dies gilt in besonderem Maße dann, wenn den Membranventilen jeweils ein Vorsteuerventil vorgeschaltet ist. Demgegenüber konnte bei der bisherigen elektrisch-elektronischen Steuerung eine derartige Maßnahme nur mit vergleichsweise großen finanziellen Aufwendungen durchgeführt werden.

Der Steuerkomfort der Filtersteueranlage wird dadurch weiter erhöht, daß eine Kontrolleinrichtung zur Anzeige jedes Spültaktsignals mit der elektronischen Steuereinheit verbunden ist. Hierdurch ist sofort erkennbar, ob die elektronische Steuereinheit wunschgemäß arbeitet. Eine weitere Erhöhung des Steuerkomforts ist dadurch erzielbar, daß eine Kontrolleinrichtung zur Anzeige jedes durchgeführten Spülstoßes mit dem Entlüftungsventil verbunden ist. Besonders bevorzugt ist die gleichzeitige Bestückung der erfindungsgemäßen Filtersteueranlage mit der Kontrolleinrichtung zur Anzeige des Spültaktsignals und der Kontrolleinrichtung zur Anzeige jedes durchgeführten Spülstoßes. Hierdurch läßt sich bei Störungen sofort eine gewisse Vorlokalisierung der Störungsursache durchführen.

Zur weiteren Erhöhung der Betriebssicherheit der erfindungsgemäßen Filtersteueranlage ist es von Vorteil, im Filteraustrag einen von der elektronischen Steuereinheit ansteuerbaren Abklopfhammer vorzusehen. Hierdurch werden Brückenbildungen im Filteraustrag und damit zu unerwünschten Druckschwankungen im Staubluftraum bzw. in den Filterschläuchen führende Verstopfungen im Filteraustrag vermieden.

Die elektronische Steuereinheit läßt sich mit einfachen Mitteln, vorzugsweise durch einen Taktpulsgenerator und zwei dem Taktpulsgenerator parallel nachgeschaltete Zähleinrichtungen realisieren, wobei der Ausgang der einen Zähleinrichtung dem Steuereingang des Entlüftungsventils zugeordnet ist, die andere Zähleinrichtung mehrere Ausgänge aufweist, jeder gezählte Impuls genau einem Ausgang der anderen Zähleinrichtung und dieser Ausgang genau einer Phasenwicklung des Schrittmotors zugeordnet ist.

Vorzugsweise hat bei dieser Ausführungsform der elektronischen Steuereinheit der Ausgang der einen Zähleinrichtung ein gegenüber den Ausgängen der anderen Zähleinrichtung verzögertes Ansprechverhalten. Hierdurch wird sichergestellt, daß der Spülstoß erst dann ausgelöst wird, nachdem der Verteilerarm des Trommelverteilers mit Hilfe des Schrittmotors lagegenau positioniert ist. Zur Gegenspülung der Filterschläuche mittels mehrerer kurz nacheinander erfolgender Spülstöße ist vorzugsweise in der elektronischen Steuereinheit die eine Zähleinrichtung zur Abgabe von Steuersignalen ausgelegt, die jeweils aus Impulsketten bestehen.

Gemäß einer besonders bevorzugten und einfachen Ausführungsform weist die elektronische Steuereinheit einen Taktpulsgenerator, einen dem Taktpulsgenerator nachgeordneten Zähler, dessen Ausgänge eineindeutig einer Phasenwicklung des Schrittmotors zugeordnet sind, und eine dem einen Ausgang des Zählers nachgeschaltete monostabile Kippstufe, welche mit dem Steuereingang des Entlüftungsventils verbunden ist, auf. In Weiterbildung der Steuereinheit sind Einrichtungen, vorzugsweise Potentiometer, vorgesehen, mit deren Hilfe der Abstand der vom Oszillator abgegebenen Impulse und die Dauer des von der monostabilen Kippstufe abgegebenen Impulses unabhängig voneinander veränderbar sind. Hierdurch wird eine bequeme Steuerbarkeit des Spülstoßabstandes und der Spülstoßdauer erzielt. Vorzugsweise ist dem Ausgang der dem Entlüftungsventil zugeordneten monostabilen Kippstufe eine weitere Kippstufe nachgeschaltet, welche ein Hammerventil zur Betätigung des Abklopfhammers ansteuert.

Um sicherzustellen, daß der Spülstoß erst dann erfolgt, wenn der Verteilerarm im Trommelverteiler mit einer Membranventilanordnung fluidisch verbunden ist, ist die dem Spülventil vorgeschaltete monostabile Kippstufe so ausgelegt, daß sie auf die abfallende Impulsflanke anspricht. Auch die dem Hammerventil zugeordnete monostabile Kippstufe ist so ausgelegt, daß sie auf die abfallende Impulsflanke anspricht. Dadurch wird sichergestellt, daß der Abklopfschlag erst nach dem Spülstoß erfolgt.

Insgesamt zeichnet sich die bevorzugte elektronische Steuereinheit dadurch aus, daß sie nicht nur mit besonders einfachen Mitteln eine der Elektronik eigene präzise Steuerung ermöglicht, sondern es darüber hinaus erlaubt, insbesondere für eine Mühlenanlage dezentrale Kommandoeinheiten zu bilden, welche über einfache elektrische Steuermittel von einer zentralen Anlagesteuerung in und außer Betrieb gesetzt werden können. Besonders in dem Fall, daß die ganze Anlage mit elektronischen Steuermitteln verriegelt ist, wird der kleinsten Arbeitseinheit, nämlich jedem einzelnen Mühlenfilter, eine elektronische Uhr gegeben.

Die Erfindung wird nachstehend anhand von Ausführungsbeispielen unter Heranziehung der schematischen Darstellungen näher beschrieben.

In den Zeichnungen zeigt

Fig. 1 einen vollständigen Niederdruckfilter,

Fig. 2 eine schematische Darstellung der Filtersteueranlage,

Fig. 3 eine vergrößerte schematische Schnittdarstellung eines Teils der Filtersteueranlage,

Fig. 4 eine Draufsicht auf den in Fig. 3 dargestellten Teil der Filtersteueranlage,

Fig. 5 eine schematische Darstellung eines zu einem Schrittmotor ausgestalteten Trommelverteilers,

Fig. 6 ein schematisches Schaltschema der elektronischen Steuereinheit und

Fig. 7 das vom Schaltschema gemäß Fig. 6 abgegebene Impulsmuster.

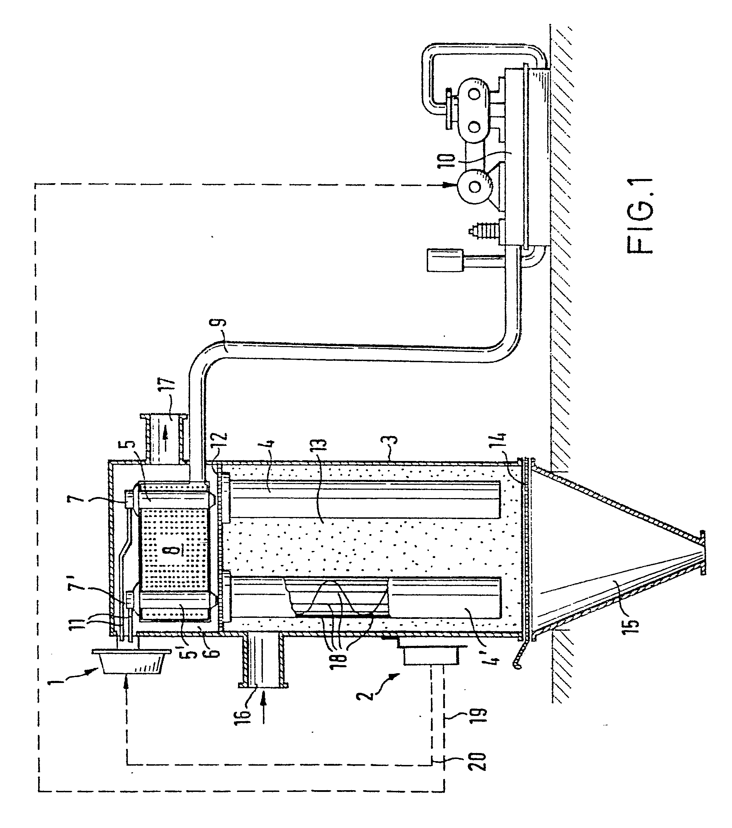

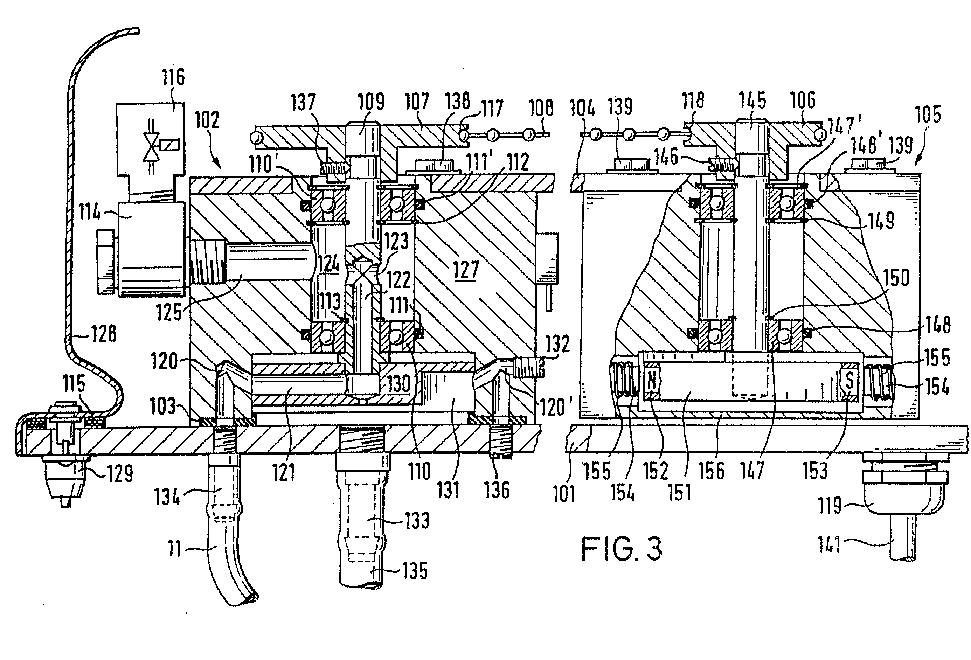

Der in Fig. 1 dargestellte Niederdruckfilter weist eine zylindrische Gehäusewand 3 auf und ist im wesentlichen in eine Staubluftkammer 13, eine Reinluftkammer 6 und einen Spüllufttank 8 unterteilt. Die Staubluftkammer 13 wird duch einen verschieblichen Boden 14 gegen einen Austragsrichter 15 abgetrennt. Statt des verschieblichen Bodens 14 kann auch eine andere Schleuse zur Verbindung der Staubluftkammer 13 nach außen vorgesehen sein. Der Filter weist ferner einen Eintrittsstutzen 16 zur Zuführung der staubhaltigen Luft in die Staubkammer 13 auf. Die Staubluftkammer ist mittels einer Abschlußplatte 12 von der Reinluftkammer 6 abgetrennt. An der Abschlußplatte 12 sind mehrere Filterschläuche 4, 4' aufgehängt. Die Filterschläuche bestehen im wesentlichen aus einem zylindrischen Stützkorb 18 und einem darübergestülpten rohrförmigen Filtergewebe. Jeder Filterschlauch hat eine nach oben freie Öffnung, durch welche die durch das Filtergewebe gereinigte Luft frei abströmen kann. Die gereinigte Luft strömt in die Reinluftkammer 6 und von dort über einen Austragstutzen 17 ins Freie oder zurück in den Arbeitsprozeß.

Der Spüllufttank 8 ist innerhalb der Reinluftkammer 6 und im Abstand über der Staubluftkammer 13 so angeordnet, daß die Abluft ungehindert in die Reinluftkammer 6 strömen kann.

Der Spüllufttank 8 wird über eine Leitung 9 von einem Niederdruckluftverdichter 10, beispielsweise einem Kreiskolbenverdichter, mit öl- und kondenswasserfreier Druckluft von etwa $1,5 \times 10^5$ N/m² (1,5 bar) beaufschlagt. Der im Spüllufttank 8 herrschende Druck liegt beim dargestellten Ausführungsbeispiel demnach um etwa 0,5 bar über dem in der Reinluftkammer 6 herrschenden Druck. Der Spüllufttank weist eine ausreichende Kapazität zur Lieferung der für die Spülung der Filterschläuche notwendigen Druckluftstöße auf.

Die Spülstöße werden nun durch die im Spüllufttank 8 angeordneten Blasdüsen 5, 5' in die Filterschläuche 4, 4' eingeblasen. Die Blasdüsen 5, 5' sind mittig über den Filterschläuchen 4, 4' im Spüllufttank angeordnet und ragen ausgangsseitig aus dem Spüllufttank heraus. Eingangsseitig sind sie in Ruhestellung von einer Membranventilanordnung 7 gegen den Außenraum und den Spüllufttank 8 abgedichtet. Von jeder Membranventilanordnung 7 führt ein Druckluftschlauch 11 zu elektrisch-fluidischen Steuermitteln 1, die am Oberteil des Filters angeordnet sind. Die elektrisch-fluidischen Steuermittel 1 werden von einer elektronischen Steuereinheit 2, die in Bedienungshöhe an der Filterwand angeordnet ist, über eine Leitung 20 betätigt. Bevorzugt wird auch der Niederdruckluftverdichter 10 von der Steuereinheit 2 über eine Leitung 19 angesteuert, insbesondere ein- und ausgeschaltet.

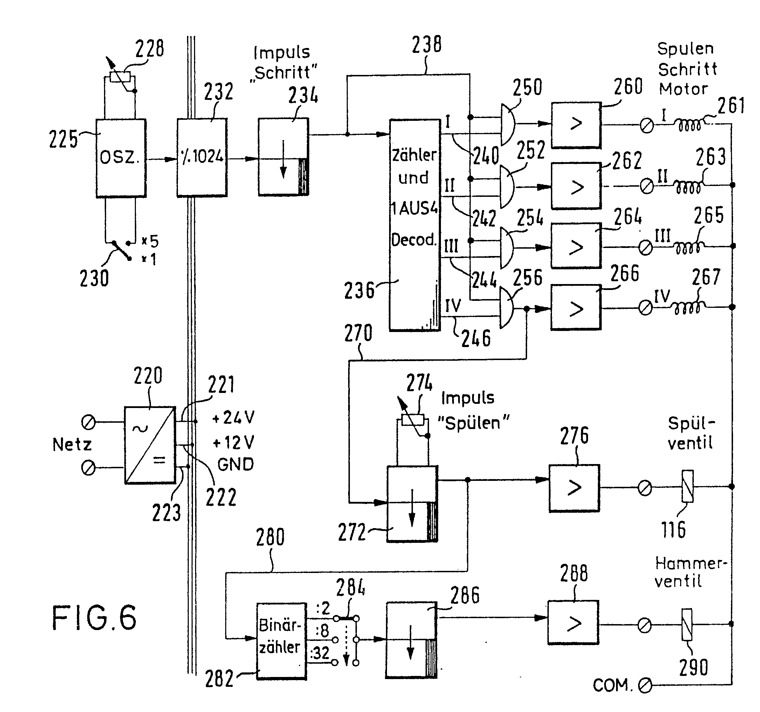

Wesentliches Element in der elektronischen Steuereinheit ist ein elektronischer Taktpulsgenerator, der in Fig. 6 durch einen Oszillator 225 realisiert und quasi als elektronische Präzisionsuhr der gesamten Steuerung vorgeschaltet ist. Als derartige elektronische Präzisionsuhr eignet sich beispielsweise ein Schwingquarz. Ausgehend von den elektronischen Taktsignalen sind mit Hilfe der elektronischen Steuereinheit 2 und den nachgeschalteten fluidischen Steuermitteln 1 die Membranventilanordnungen 7 über die Druckluftschläuche 11 zyklisch ansteuerbar, um die Filterschläuche 4, 4' zyklisch mit Druckluftstößen zu beaufschlagen. Der nach jedem Spülstoß von der Filteraußenwandung abgefallene Staub sammelt sich auf dem als Schieber ausgebildeten Boden 14 und kann über den Austragstrichter 15 abgezogen werden. Im Bereich des Austragstrichters 15 kann ein (nicht dargestellter) Abklopfhammer vorgesehen sein, der zur Verhinderung von Brückenbildung periodisch von der elektronischen Steuereinheit 2 ansteuerbar ist. Hierdurch wird ein unerwünschter Materialstau im Bereich des Austragstrichters 15 bzw. des Bodens 14 und damit eine unerwünschte Druckveränderung in der Staubluftkammer 13 vermieden.

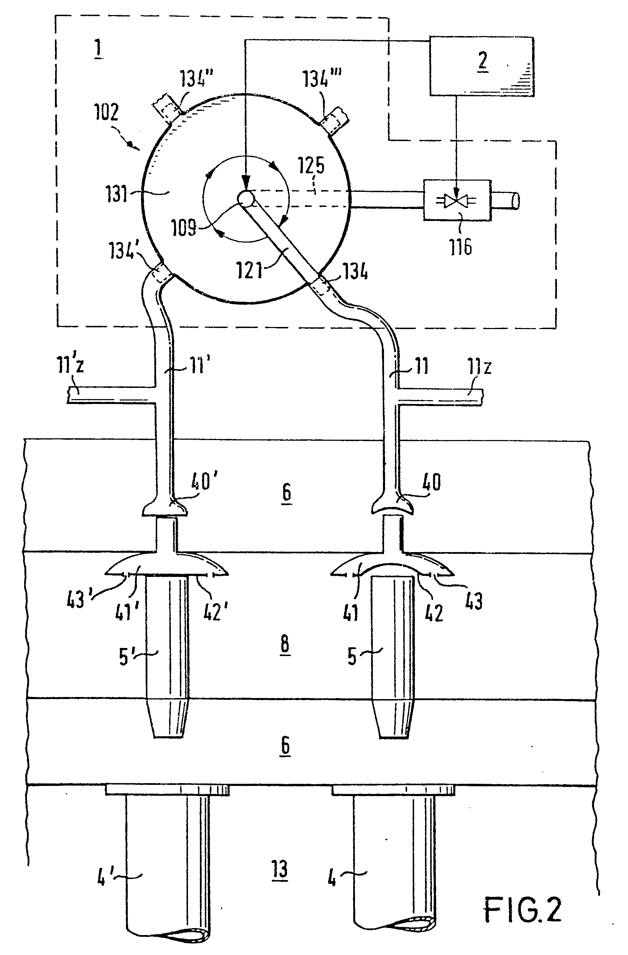

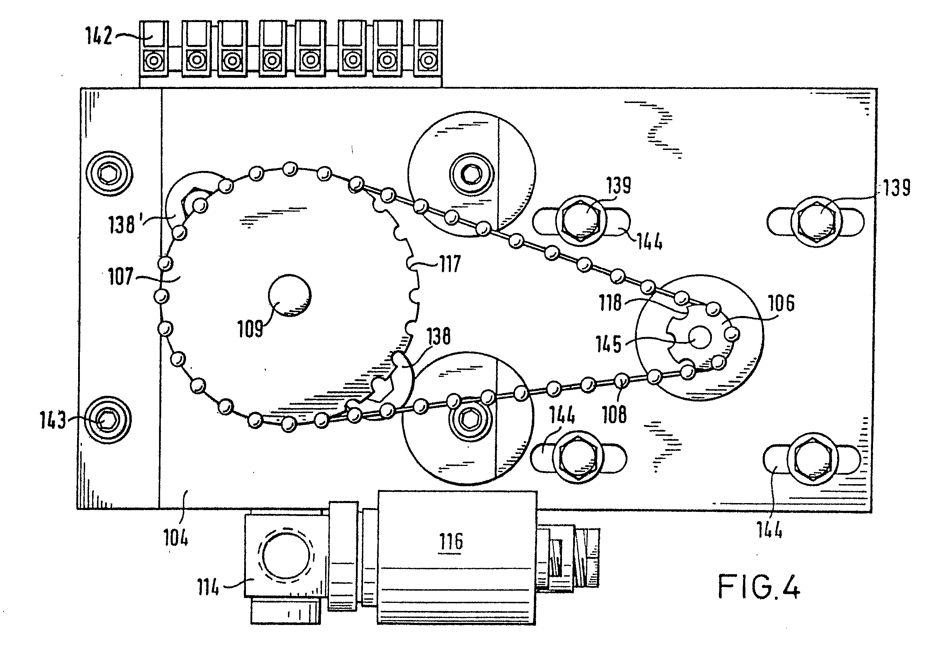

Gemäß Fig. 2 und 3 sind die Membranventilanordnungen 7, 7' jeweils aus einer Ventilmembran 42, 42' mit darüber angeordneter Gegendruckkammer 41, 41' sowie die Gegendruckkammer 41, 41' mit dem Spüllufttank 8 verbindenden Drosselöffnungen 43, 43' und die Gegendruckkammer 41, 41' im Bereich der Reinluftkammer 6 abdeckenden Schnellventilen 40, 40' aufgebaut. Die aus Ventilmembran 42, 42', Gegendruckkammer 41, 41' und Drosselöffnungen 43, 43' bestehende Ventilanordnung ist aus der deutschen Patentschrift 1 407 922 bekannt. Das Schnellventil 40, 40' ist aus der deutschen Offenlegungsschrift 2 233 529 bekannt. Gemäß den Fig. 2 und 3 sind die Schnellventile 40, 40' über Druckluftschläuche 11, 11' mit einem Trommelverteiler 102 verbunden. Der Trommelverteiler 102 weist hierbei eine Trommelausnehmung 131 auf, von welcher rohrstutzenförmige Nippel 134, 134', 134'', 134''' nach außen abstehen und mit den Druckluftschläuchen 11, 11' verbunden sind. Im Trommelverteiler 102 ist ein Verteilerarm 130 so drehbar gelagert, daß eine im Verteilerarm 130 vorgesehene Armbohrung 121 nacheinander unmittelbar vor die rohrförmigen Nippel 134 bis 134''' gedreht werden kann. Die Armbohrung 121 geht in eine in dessen Drehwelle 109 vorgesehene Wellenbohrung 122 über. Die Wellenbohrung 122 geht in eine im Verteilerblock 127 des Trommelverteilers 102 vorgesehene Querbohrung 125 über, an deren Ausgang ein über eine Magnetspule betätigbares elektro-pneumatisches Entlüftungsventil 116 angeschlossen ist.

Der Trommelverteiler wird über einen Hauptschlauch 135 und einen Hauptnippel 133 mit einem Niederdruck-Fluid, im einfachsten Fall Druckluft, beaufschlagt. Diese Niederdruckluft drückt die Schnellventile 40, 40' gegen die in die Reinluftkammer 6 ragenden Stutzen der Gegendruckkammern 41, 41' der Membranventile 42, 42'. Hierdurch herrscht wegen der Drosselöffnungen 43, 43' in den Gegendruckkammern 41, 41' der im Spüllufttank 8 herrschende Druck. Dies wiederum hat zur Folge, daß auch die Ventilmembrane 42, 42' gegen die Blasdüsen 5, 5' angedrückt werden und diese luftdicht gegen den Spüllufttank 8 verschließen. Die geschilderten Druck- bzw. Membranverhältnisse liegen auch dann vor, wenn die Armbohrung 121 mit einem der Nippel 134 bis 134''' fluchten und das Entlüftungsventil 116 geschlossen ist.

Wird nun das Entlüftungsventil 116 geöffnet — dieser Zustand ist in Fig. 2 an der rechten Ventilanordnung dargestellt —, dann hebt sich das Schnellventil 40 schlagartig vom Stutzen der Gegendruckkammer 41 ab, so daß der Druck in der Gegendruckkammer 41 schlagartig abfällt. Dies wiederum hat zur Folge, daß die Ventilmembran 42 schlagartig von der Blasdüse 5 abhebt und der Filterschlauch 4 mit einem Spülstoß beaufschlagt wird.

Bei einer größeren Anzahl von Filterschläuchen 4 ist es von Vorteil, mehrere Membranventilanordnungen 7, 7' über Druckluft-Zweigleitungen $11_z$ mit einem der rohrförmigen Nippel 134 bis 134''' des Trommelverteilers 102 zu verbinden..Durch diese Maßnahme ist der Steueraufwand reduzierbar.

Gemäß Fig. 2 werden von der elektronischen Steuereinheit 2 das Entlüftungsventil 116 und der Trommelverteiler 102, genauer die Drehung von dessen Verteilerarm 130 mit darin vorgesehener Armbohrung 121, angesteuert. Diese Maßnahme hat bei entsprechender Auslegung der Elektronik den Vorteil, daß die Spülstoßdauer und die Spülstoßabstände unabhängig voneinander steuer- bzw. veränderbar sind. Selbstverständlich werden hierbei das Entlüftungsventil 116 und der Trommelverteiler 102 nur insoweit unabhängig voneinander angesteuert, als das Entlüftungsventil 116 nur dann öffnet, wenn die Armbohrung 121 mit einem Nippel 134 bis 134''' fluchtet.

Gemäß Fig. 3 ist der Trommelverteiler 102 auf einer Grundplatte 101 montiert. In der Grundplatte 101 sind Bohrungen vorgesehen, durch welche die rohrartig ausgestalteten Nippel 134 bis 134''' ragen. Die Nippel 134 bis 134''' gehen in Winkelbohrungen 120 über, welche im Trommelverteilerblock 127 ausgebohrt sind. Die Winkelbohrungen 120 münden in die Trommelausnehmung 131 im Trommelverteiler 102. Die aus der Grundplatte 101 herausragenden Enden der Nippel 134 bis 134''' sind profiliert, um dem über diese Nippelenden gezogenen Verteilerschlauch 11 ausreichend Halt zu geben. Selbstverständlich kann der Schlauch 11 auch noch zusätzlich mit Schlauchklemmen am Nippel 134 befestigt werden. Die Trommelverteilerausnehmung 131 hat eine zylindrische Form. Die Mündungen der Winkelbohrungen 120 in die Trommelverteilerausnehmung 131 sind in gleichem Winkelabstand voneinander angeordnet. Das in Fig. 3 auf der rechten Seite dargestellte Ausführungsbeispiel für eine Winkelbohrung 120' zeigt eine zusätzliche Anschlußmöglichkeit für einen Schlauch 11. Bei der Winkelbohrung 120' kann ein Schlauch 11 mit Hilfe eines Nippels sowohl an der Seitenwandung des Trommelverteilers 102 als auch — wie bei der Winkelbohrung 120 — unterhalb der Grundplatte 101 befestigt werden. Es kann auch an beiden Ausgängen der Winkelbohrung 120' gleichzeitig je ein Schlauch befestigt werden. Diese Schläuche sind dann bezüglich der Winkelbohrung 120' parallel geschaltet und entsprechen den beiden Druckschläuchen 11 und 11$_z$ bzw. 11' und 11'$_z$ in Fig. 2. Falls ein oder beide Ausgänge der Trommelverteilerbohrung 120' nicht benötigt werden, sind diese mittels Stopfen 132 und 136 druckdicht verschließbar. Diese Lösung hat den Vorteil, daß ein und derselbe Trommelverteiler 102 für eine unterschiedliche Anzahl von Filterschläuchen 4, 4' bzw. diesen zugeordneten Druckschläuchen 11, 11' verwendbar ist, wobei je nach Anzahl der zu bespülenden Filterschläuche 4, 4' einzelne Winkelbohrungen 120 bzw. 120' mit Stopfen 132, 136 verschlossen oder geöffnet werden.

Durch die Grundplatte 101 ist als weiterer rohrförmiger Nippel der Hauptnippel 133 geführt. Der Hauptnippel 133 ist über den Haupt-Versorgungsdruckschlauch 135 mit einer Niederdruckquelle, beispielsweise dem Niederdruckverdichter 10, verbunden. Über den Hauptnippel 133 werden die Trommelverteilerausnehmung 131 und davon ausgehend die Druckverteilerschläuche 11, die Armbohrung 121 und der sich daran anschließende Raum mit Niederdruckluft beaufschlagt. Diese Beaufschlagung mit Niederdruckluft sorgt dafür, daß die Membranventilanordnungen 7 bzw. die Schnellventile 40 und 40' sowie die Ventilmembrane 42 und 42' die darunterliegenden Räume jeweils abschließen. Zwischen dem Trommelverteiler 102 und der Grundplatte 101 sind Dichtungen 103 angeordnet, um einen druckdichten Abschluß des Trommelverteilers 102 gegenüber der Grundplatte 101 zu gewährleisten.

In der Trommelverteilerausnehmung 131 ist der Verteilerarm 130 drehbar gehalten. Zu diesem Zweck ist der Verteilerarm 130 an der Welle 109 befestigt, die über Kugellager 110, 110' in einer axial durch den Trommelverteilerblock 127 geführten Axialbohrung 124 gehaltert ist. Die Kugellager 110 und 110' sind mittels Sicherungsringen 112 und 113 in der Axialbohrung 124 gehalten.

Durch die Welle 109 ist in axialer Richtung die Wellenbohrung 122 geführt, die an ihrem verteilerarmseitigen Ende in die Armbohrung 121 und an ihrem anderen Ende in eine Querbohrung 123 übergeht. Die Querbohrung 123 mündet in die Axialbohrung 124 im Trommelverteilerblock 127. Die Axialbohrung 124 ist über die im Trommelverteilerblock 127 vorgesehene Querbohrung 125 fluidisch mit dem als elektro-pneumatisches Ventil ausgestalteten Entlüftungsventil 116 verbunden. Das Entlüftungsventil 116 ist über einen Winkelschwenkverteiler 114 am Trommelverteilerblock 127 befestigt.

Zwischen der Wandung der Axialbohrung 124 im Verteilerblock 127 und den Kugellagern 110 und 110' sind O-Ringe 111 und 111' angeordnet. Diese Maßnahme hat den Vorteil, daß die Kugellager 110 und 110' mit Lottersitz in der Axialbohrung 124 gehaltert werden können, gleichwohl aber druckdicht mit der Wandung der Axialbohrung 124 verbunden sind.

Auf dem aus dem Trommelverteilerblock 127 herausragenden Ende der Welle 109 ist eine Profilscheibe 107 mittels einer Gewindeschraube 137 justierbar befestigt. Die Profilscheibe 107 weist Ausnehmungen 117 auf, in welche die Kugeln einer Kugelsaite 108 eingreifen. Der Trommelverteiler 102 ist über die als Untersetzungsgetriebe wirkende Profilscheibe 107, Kugelsaite 108 und eine Profilscheibe 106 eines Schrittmotors 105 mit letzterem verbunden. Auch die Profilscheibe 106 weist Ausnehmungen 118 für den Eingriff der Kugeln der Kugelsaite 108 auf. Das Untersetzungsverhältnis ist im dargestellten Ausführungsbeispiel 1 : 4 gewählt. Das heißt, daß nach vier dem Schrittmotor zugeführten Takten bzw. viermaligem Weiterrücken der als Anker ausgebildeten Blockscheibe 151 des Schrittmotors 105, der der Blockscheibe 151 entsprechende Verteilerarm 130 des Trommelverteilers 102 eine Position weiterrückt, derart, daß die Armbohrung 121 mit der Mündung der Winkelbohrung 120 bzw. 120' fluchtet.

Beim Ausführungsbeispiel gemäß den Fig. 3 und 4 ist ein Unipolar-Schrittmotor mit vier Statorspulen 155 bzw. acht Statorpolen 154 und einem Schrittwinkel von 15° vorgesehen. Der im dargestellten Ausführungsbeispiel wiedergegebene Trommelverteiler 102 weist 24 Winkelbohrungen 120, 120' auf, die demgemäß untereinander ebenfalls einen Winkelabstand von 15° haben.

Der Schrittmotor 105 ist mittels Justierschrauben 139 an einer Motorplatte 104 aufgehängt. Die Justierschrauben 139 sind in Langlöchern 144 geführt. Die Langlöcher 144 erstrecken sich in Längsrichtung der Motorplatte 104. Hierdurch ist eine Längsverschiebung und damit eine Justiermöglichkeit für den Schrittmotor 105 gegeben.

Zur gegenseitigen Einjustierung des Verteilerarms 130 und der Anker- bzw. Blockscheibe 151 ist ferner neben der Gewindeschraube 137 an der Profilscheibe 107 eine weitere Gewindeschraube 146 an der Profilscheibe 106 vorgesehen. Die Gewindeschraube 146 greift an der Motorwelle 145 an. Mittels der Gewindeschrauben 137 und 146 ist zumindest eine Vorjustierung möglich. Eine Feinjustierung derart, daß die Armbohrung 121 genau dann mit der Winkelbohrung 120 fluchtet, wenn die Magnetankerpole 152, 153 den magnetisierbaren Statorpolen 154 bzw. den Statorspulen 155 gegenüberliegen, ist mittels weiterer Justierschrauben 138 oder 138' möglich. Die Justierschrauben 138 oder 138' ermöglichen eine Verschwenkung der Motorplatte 104 gegenüber dem Trommelverteilerblock 127. Im dargestellten Ausführungsbeispiel ist der Schrittmotor 105 lediglich an der Motorplatte 104 befestigt und weist einen Abstand von der Grundplatte 101 auf. Hierdurch wird die Verrschwenkbarkeit des Schrittmotors erleichtert. Der Schrittmotor ist über eine Abschlußplatte 156 gegenüber der Grundplatte 101 abgeschlossen.

Zur Veranschaulichung der eingangs genannten »eindeutigen Abbildung« der geometrischen Anordnung der Statorpole 154 auf die Mündungen der Winkelbohrungen 120 im Trommelverteiler 102 mittels der als Anker wirkenden Blockscheibe 151, dem Untersetzungsgetriebe — bestehend aus der Profilscheibe 106, der Kugelsaite 108 und der Profilscheibe 107 — und dem Verteilerarm 130 sind der Schrittmotor 105 und der Trommelverteiler 102 weitestgehend gleich ausgestaltet. Demgemäß ist auch die Blockscheibe 151 — wie der Verteilerarm 130 — mittels der Motorwelle 145, den Kugellagern 147, 147', den Sicherungsringen 149, 150 und den O-Ringen 148, 148' in einer zylindrischen Ausnehmung im Schrittmotorblock gehalten. Statt des dargestellten Schrittmotors 105 können auch andere handelsübliche Schrittmotoren verwendet werden.

Die Versorgungsleitungen für die elektrische Energie werden über das Steuer- und Versorgungskabel 141 dem Schrittmotor 105 und dem Entlüftungsventil 116 zugeführt. Das Steuer- und Versorgungskabel 141 ist mittels einer Kabelverschraubung 119 an der Grundplatte 101 gehaltert. Der Schrittmotor 105 und das Entlüftungsventil 116 sind über eine Bandklemme 142 mit dem Steuer- und Versorgungskabel 141 verbunden.

Die elektronische Steuereinheit 2 ist nun so ausgelegt, daß das Entlüftungsventil 116 erst dann einen Steuerimpuls erhält, wenn die Armbohrung 121 mit der Mündung einer Winkelbohrung fluchtet. Aufgrund des Steuerimpulses öffnet das Entlüftungsventil 116, so daß der Druck in der Kammer bzw. den Kammern der zugeordneten Membranventilanordnung 7 abfällt und ein Spülstoß eingeleitet wird. Die Spülstoßdauer wird im wesentlichen durch die Öffnungsdauer des Entlüftungsventils 116 bestimmt.

Die in den Fig. 3 und 4 dargestellte Anordnung der fluidischen Steuermittel und elektro-mechanischen Wandelelemente läßt sich nun dadurch explosionssicher ausgestalten, daß diese Elemente von einer Haube 128 und der Grundplatte 101 gasdicht gegen den Außenraum abgeschirmt und mit Inertgas gefüllt sind. Hierzu ist die gasundurchlässige Haube 128 über eine Dichtung 115 mittels eines Schnellverschlusses 129 gasdicht auf der Grundplatte 101 befestigt. Über den Hauptnippel 133 wird nun der in den Fig. 3 und 4 dargestellten Anordnung unter Niederdruck stehendes Inertgas zugeführt.

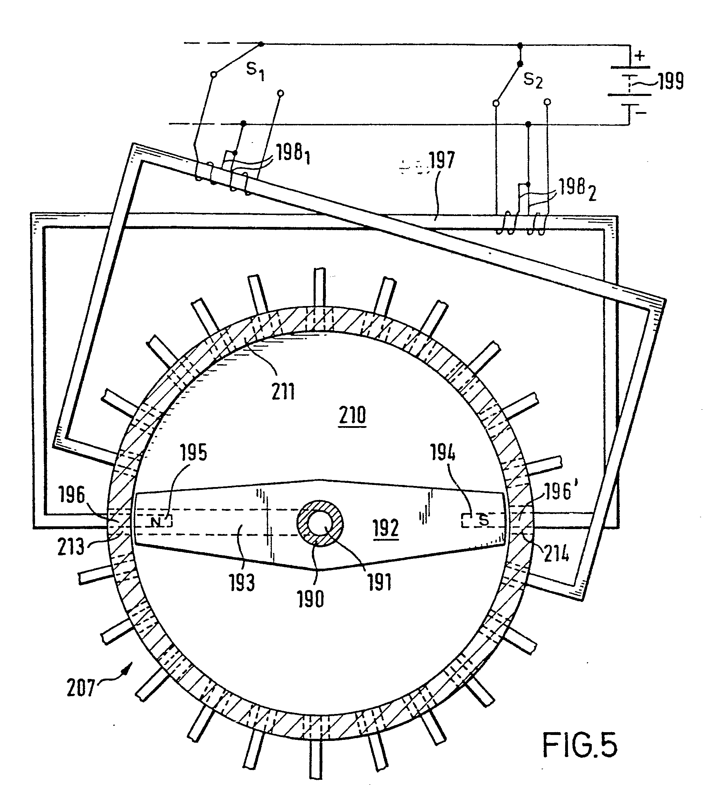

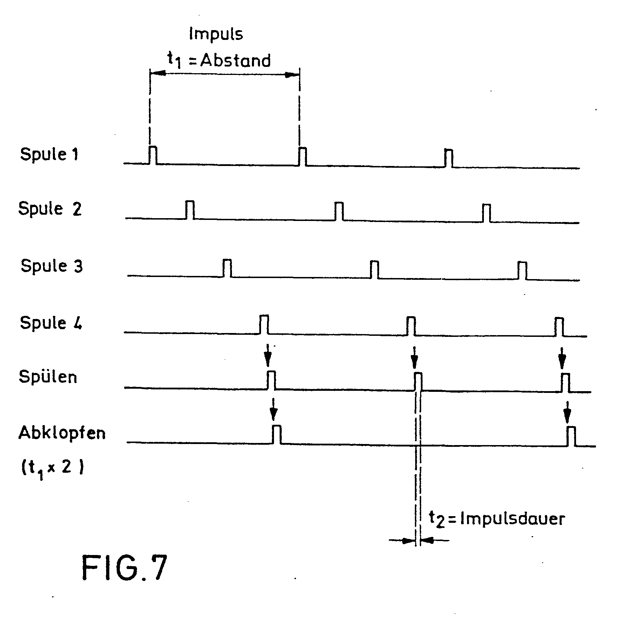

Gemäß Fig. 5 ist der Trommelverteiler 207 gleichzeitig Schrittmotor. Demgemäß weist er zunächst den anhand der Fig. 3 und 4 dargestellten Aufbau eines Trommelverteilers mit einer zylindrischen Trommelausnehmung 210, darin drehbarem Trommelverteiler- bzw. Ankerarm 192 und im Ankerarm 192 vorgesehener Ankerarmbohrung 193 auf. Die Ankerarmbohrung 193 entspricht der Armbohrung 121 des in den Fig. 3 und 4 dargestellten Ausführungsbeispiels. Der Ankerarm ist an einer Ankerarmwelle 190 befestigt, die beispielsweise entsprechend dem in in Fig. 3 und 4 dargestellten Ausführungsbeispiel für die Welle 109 ausgestaltet ist. Auch die Halterung der Ankerarmwelle 190 entspricht der Halterung der Armwelle 109 des in Fig. 3 dargestellten Trommelverteilers 102. Die Ankerarmbohrung 193 ist über eine Ankerarmwellenbohrung 191 mit dem Entlüftungsventil 116 verbunden. Die fluidische Verbindung ist beispielsweise gemäß dem in Fig. 3 dargestellten Ausführungsbeispiel ausgestaltet.

In der Trommelwand 211 sind Trommelwandbohrungen 213 und 214 vorgesehen, die den Winkelbohrungen 120 und 120' gemäß Fig. 3 entsprechen. Der Ankerarm ist so in der Trommelausnehmung drehbar angeordnet, daß dessen Ankerarmbohrung 193 zyklisch in fluchtende Position mit den Trommelwandbohrungen 213, 214 drehbar ist. Der als Schrittmotor ausgebildete Trommelverteiler 207 weist im dargestellten Ausführungsbeispiel einen ortsfest zur Mündung der Ankerarmbohrung 193 angeordneten permanenten Nordpol 195 auf. Der Ankerarm 192 ist symmetrisch zur Ankerarmwelle ausgestaltet und weist an seinem dem Nordpol 195 gegenüberliegenden Ende einen permanenten Südpol 194 auf. Zwar gibt es keine magnetischen Monopole, gleichwohl aber sind der Nord- und der Südpol als einzelne Pole dargestellt, da es lediglich darauf ankommt, daß die beiden gegenüberliegenden Enden des Ankerarmes 192 zumindest in einem Teilbereich eine entsprechende magnetische Polung aufweisen. Hierzu eignen sich beispielsweise im Handel erhältliche Kleinstpermanentmagnete, die an den gegenüberliegenden Enden des Ankerarmes 192 angeordnet sind.

Ferner sind bezüglich der Trommelwandbohrungen 213 und 214 Statorpole 196, 196' ortsfest angeordnet. Die Statorpole bestehen aus einem magnetisierbaren Material und sind über ein Statorjoch 197 miteinander verbunden. Jedes Statorjoch trägt eine Statorwicklung $198_1$ bzw. $198_2$. Beim dargestellten Ausführungsbeispiel sind die Statorwicklungen $198_1$ und $198_2$ für den Betrieb eines Unipolar-Schrittmotors gewickelt. Die Statorpole 196, 196' sind über die Statorwicklungen $198_1$, $198_2$, die Schalter $S_1$, $S_2$ und die Batterie 199 umpolbar. Durch entsprechendes Antakten der Schalter $S_1$, $S_2$ kann nun die Ankerarmbohrung 193 nacheinander in fluchtende Position zu den Trommelwandbohrungen 213 und 214 gedreht werden. Der Vorteil dieser Anordnung liegt darin, daß eine Justierung zwischen zwei getrennten Einheiten, nämlich einem Trommelverteiler und einem Schrittmotor, nicht erforderlich ist.

Vorzugsweise bestehen die Trommelwand 211 und der Ankerarm 192 aus nicht-magnetisierbarem Material. Statt dessen können aber auch die Statorpole 196, 196' und die Permanentmagnete 194, 195 durch magnetische Abschirmung von den übrigen Teilen magnetisch isoliert werden.

Gemäß dem in Fig. 6 dargestellten Blockschaltbild geht die Steuerung von einem Oszillator 225 aus. Der Oszillator 225, die nachfolgenden elektronischen Elemente und die elektro-mechanischen Wandlerelemente werden von einem mit Netzanschluß versehenen Gleichrichter 220 mit elektrischer Energie versorgt. Der Gleichrichter 220 weist drei Ausgänge 221, 222 und 223 auf, von denen in der angegebenen Reihenfolge der erste auf einem Potential von 24 Volt, der zweite auf einem Potential von 12 Volt und der dritte auf einem Massepotential liegt.

Der Abstand der am Oszillatorausgang abgegebenen Impulse ist über ein Potentiometer 228 steuerbar. Eine weitere Steuerung dieses Impulsabstandes ist über einen Umschalter 230 möglich, der in seiner einen Stellung eine Steuerung des Pulsabstandes mit Hilfe des Potentiometers 228 im Bereich von 2 bis 20 Sekunden und in seiner anderen Stellung eine Steuerung des Pulsabstandes im Bereich von 10 bis 100 Sekunden zuläßt. Die entsprechenden Schalterstellungen sind demgemäß mit »x1« und »x5« bezeichnet.

Mit Hilfe des Potentiometers 228 und des Umschalters 230 ist der Spülstoßabstand steuerbar.

Dem Oszillator 225 ist ein Binärteiler 232 nachgeschaltet. Im dargestellten Ausführungsbeispiel handelt es sich um einen $2^{10}$-Binärteiler, der eine auf die abfallende Flanke des Impulses ansprechende monostabile Kippstufe 234 ansteuert. Die monostabile Kippstufe 234 definiert die Ausgangsimpulsbreite, die mindestens so groß sein muß, daß der Schrittmotor innerhalb dieser Zeit von einem Statorpol zum nächsten gerückt werden kann. Die von der monostabilen Kippstufe ausgehenden Impulse werden einem als »1 aus 4 Decoder« ausgestalteten Zähler 236 zugeführt. Jeder Zählerausgang 140, 242, 244, 246 ist eineindeutig dem einen Steuereingang eines von vier UND-Gliedern 250, 252, 254 und 256 zugeordnet. Der jeweils andere Steuereingang der zweistufigen UND-Glieder 250 bis 256 ist über eine gemeinsame Zweigleitung 238 mit dem Ausgang der monostabilen Kippstufe 234 verbunden. Bei dieser Schaltung bestimmt die von der monostabilen Kippstufe 234 abgegebene Impulsbreite die Ansprechdauer der UND-Glieder 250 bis 256. Die Zählerausgänge 240 bis 246 legen das jeweils ansprechende UND-Glied fest. Den UND-Gliedern 250 bis 256 sind vier Treiberstufen 260 bis 266 nachgeordnet, wobei jede Treiberstufe von genau einem UND-Glied 250 bis 256 angesteuert wird. Die Treiberstufen steuern die Umschalter für vier Statorspulen 261, 263, 265 und 267 eines unipolaren Schrittmotors.

Beim dargestellten Ausführungsbeispiel wird von einem Schrittmotor mit vier Statorspulen bzw. acht Statorpolen und einem Untersetzungsverhältnis von 1 : 4 zwischen Schrittmotor und Trommelverteiler ausgegangen.

Das dem vierten Ausgang 246 des Zählers 236 zugeordnete UND-Glied 256 steuert über eine Verbindungsleitung 270 den Eingang einer monostabilen Kippstufe 272. Auch diese monostabile Kippstufe spricht auf die abfallende Flanke an. Demgemäß ist sichergestellt, daß die monostabile Kippstufe erst dann ein Signal abgibt, wenn der Schrittmotor einen Schritt ausgeführt hat und demgemäß der Verteilerarm im Trommelverteiler mit der entsprechenden Winkelbohrung 120 bzw. Trommelwandbohrung 213 fluchtet. Der monostabile Zustand der Kippstufe 272 und damit die Breite des von ihm abgegebenen Impulses ist mittels eines Potentiometers 274 steuerbar. Die monostabile Kippstufe 274 steuert eine Treiberstufe 276 und diese wiederum das Entlüftungsventil 116 an. Demgemäß ist mit Hilfe des Potentiometers 274 die Spülstoßdauer unabhängig vom Spülstoßabstand veränderbar, wobei die Unabhängigkeit selbstverständlich nur so weit geht, daß das Spülventil so lange offengehalten wird, wie der Verteilerarm und die Membranventilanordnungen miteinander fluidisch verbunden sind.

Der Ausgang der monostabilen Kippstufe 272 ist über eine Steuerleitung 280 mit dem Eingang eines Binärzählers 282 verbunden. Der Binärzähler 282 weist drei Ausgänge, nämlich »:2.«, »:8.«, »:32« auf, die über einen Umschalter 284 jeweils mit dem Steuereingang einer monostabilen Kippstufe 286 verbindbar sind. Demgemäß kann die monostabile Kippstufe 286 nach jedem zweiten, nach jedem achten oder nach jedem zweiunddreißigsten Impuls angesteuert werden. Auch die monostabile Kippstufe 286 spricht auf die abfallende Impulsflanke an. Der Ausgang der monostabilen Kippstufe 286 ist mit dem Eingang einer Treiberstufe 288 verbunden. Die Treiberstufe 288 steuert ein Hammerventil 290 zur Betätigung des Abschlaghammers. Auch in diesem Fall ist wegen des Ansprechverhaltens der monostabilen Kippstufe 286 sichergestellt, daß der Abschlaghammer erst nach Beendigung des Spülvorgangs anspricht.

In Fig. 7 ist das von der Schaltung gemäß Fig. 6 abgegebene Impulsschema dargestellt. Die Breite der den Spulen 1, 2, 3 und 4 zugeordneten Impulse wird durch die Kippzeit 272 bestimmt. Der gegenseitige Impulsabstand wird durch den Oszillator 225 bzw. das Potentiometer 228 und den Umschalter 230 festgelegt. Aufgrund des Zählers 236 und der nachgeschalteten UND-Glieder 250 bis 256 ergibt sich die Versetzung der Impulse von Spule zu Spule.

Die ansteigende Flanke der dem Spülen zugeordneten Impulse stimmt mit der abfallenden Flanke der Impulse für die Spule 4 überein. Die Breite der Spülimpulse und damit die Spüldauer ist mittels des Potentiometers 274 steuerbar. Aufgrund des dargestellten Impulsschemas zeigt sich, daß die Spüldauer und der Spülstoßabstand in weiten Grenzen unabhängig voneinander steuerbar sind.

Die ansteigende Flanke der dem Abklopfen zugeordneten Impulse stimmt mit der abfallenden Flanke jedes zweiten Spülimpulses überein. Durch Umschalten des Schalters 284 kann dafür Sorge getragen werden, daß jeder Abklopfimpuls nur mit dem achten oder gar zweiunddreißigsten Spülimpuls übereinstimmt, der Abklopfhammer also erst nach jedem achten oder zweiunddreißigsten Spülimpuls klopft.

In Übereinstimmung mit Fig. 1 ist in der Schaltung gemäß den Fig. 6 und 7 eine nicht dargestellte Einheit vorgesehen, welche den Niederdruckluftverdichter 10 steuert, insbesondere ein- und ausschaltet. Vorzugsweise wird hierbei ein Einschaltimpuls vor Ansteuerung des Schrittmotors 105 abgegeben.

## Patentansprüche

1. Filtersteueranlage zur Steuerung der Steuerparameter Spülstoßdauer und Spülstoßabstand und gegebenenfalls weiterer Steuerparameter einer zyklischen Gegenspülung von Filterschläuchen (4, 4') in einer Getreidemühlenanlage, welchen Filterschläuchen zur Gegenspülung jeweils ein fluidisch betätigbares Membranventil (41, 42; 41', 42') zugeordnet ist, mit

a) einer Schaltung (2) zur elektronischen Vorgabe von Taktsignalen und
b) einer der elektronischen Schaltung (2) nachgeschalteten, von den Taktsignalen steuerbaren und ein Entlüftungsventil (116) aufweisenden ersten elektro-mechanischen Wandlereinheit zur Steuerung der Spülstoßdauer,

dadurch gekennzeichnet, daß

c) der elektronischen Schaltung (2) eine von den Taktsignalen steuerbare zweite elektromechanische Wandlereinheit zur Steuerung des Spülstoßabstandes nachgeschaltet ist und
d) die elektro-mechanischen Wandlereinheiten zur voneinander unabhängigen Steuerung der Spülstoßdauer und des Spülstoßabstandes durch die elektronische Schaltung (2) ausgelegt sind.

2. Filtersteueranlage nach Anspruch 1, dadurch gekennzeichnet, daß die zweite elektromechanische Wandlereinheit einen Trommelverteiler (102) aufweist.

3. Filtersteueranlage nach Anspruch 1 oder 2, dadurch gekennzeichnet, daß das Entlüftungsventil (116) am Eingang (125) des Trommelverteilers (102) angeordnet ist.

4. Filtersteueranlage nach Anspruch 2 oder 3, dadurch gekennzeichnet, daß jedem Membranventil (41, 42; 41', 42') ein Vorsteuerventil (40; 40') vorgeschaltet und mit einem Ausgang (134; 134'; 213; 214) des Trommelverteilers (102; 207) verbunden ist, wobei vorzugsweise zwei bis vier Vorsteuerventile (40; 40') an einem gemeinsamen Ausgang (134; 134'; 213; 214) des Trommelverteilers (102; 207) liegen.

5. Filtersteueranlage nach einem der Ansprüche 2 bis 4, dadurch gekennzeichnet, daß die zweite elektro-mechanische Wandlereinheit einen mit dem Arm (130; 192) des Trommelverteilers (102; 207) antriebsmäßig verbundenen Schrittmotor (105; 207) aufweist, der vorzugsweise über ein Untersetzungsgetriebe (106, 107, 108), insbesondere mit wählbarem Untersetzungsverhältnis, mit dem Arm (130) verbunden ist.

6. Filtersteueranlage nach Anspruch 5, dadurch gekennzeichnet, daß der Schrittmotor (105) und der Trommelverteiler (102) parallelachsig angeordnet sind und der Schrittmotor (105) in einer Ebene senkrecht zu den Achsen (109, 145) schwenkbar (138; 138') ist, vorzugsweise in einem Winkelbereich von ca. 15°.

7. Filtersteueranlage nach einem der Ansprüche 2 bis 5, dadurch gekennzeichnet, daß der Trommelverteiler (207) selbst als Schrittmotor (207) ausgestaltet ist.

8. Filtersteueranlage nach einem der Ansprüche 2 bis 7, dadurch gekennzeichnet, daß die Drehwelle (109; 191) des Trommelverteilers (102; 207) in Kugellagern (110; 110') geführt ist und die Kugellager (110; 110') über O-Ringe (111; 111') druckdicht an der Wandung einer Axialbohrung (124) im Trommelverteilerblock (127) anliegen.

9. Filtersteueranlage nach einem der Ansprüche 5 bis 8, dadurch gekennzeichnet, daß der Schrittmotor (105; 207), der Trommelverteiler (102; 207) und das Entlüftungsventil (116) zu einer ersten Baueinheit (1) und die elektronische Schaltung (2) zu einer zweiten Baueinheit zusammengefaßt sind.

10. Filtersteueranlage nach einem der Ansprüche 1 bis 9, dadurch gekennzeichnet, daß das Zeitintervall zwischen zwei Ventilbetätigungen im Bereich von 0,5 s bis 10 min, insbesondere im Bereich von 2 s bis 100 s und die Dauer der Ventilbetätigung im Bereich von 30 ms bis 1 s, insbesondere im Bereich von 30 ms bis 150 ms einstellbar sind.

11. Filtersteueranlage nach einem der Ansprüche 1 bis 10, dadurch gekennzeichnet, daß das Entlüftungsventil (116) als elektro-pneumatisches Ventil ausgestaltet und im stromlosen Zustand vorzugsweise geschlossen ist.

12. Filtersteueranlage nach einem der Ansprüche 1 bis 11, dadurch gekennzeichnet, daß die elektro-mechanische Wandlereinheiten von einem druckdicht abgeschlossenen und mit einem Inertgas gefüllten Gehäuse (101, 128) umgeben sind.

13. Filtersteueranlage nach einem der Ansprüche 1 bis 12, dadurch gekennzeichnet, daß eine Kontrolleinrichtung zur Anzeige jedes Spültaktsignals mit der elektronischen Schaltung (2) und/oder eine Kontrolleinrichtung zur Anzeige jedes durchgeführten Spülstoßes mit dem Entlüftungsventil (116) verbunden ist.

14. Filtersteueranlage nach einem der Ansprüche 1 bis 13, dadurch gekennzeichnet, daß als weitere von den Taktsignalen der elektronischen Schaltung (2) steuerbare elektro-mechanische Wandlereinheit ein einen Abklopfhammer betätigendes Hammerventil (290) vorgesehen ist.

15. Filtersteueranlage nach einem der Ansprüche 1 bis 14, dadurch gekennzeichnet, daß die elektronische Schaltung (2) einen Taktpulsgenerator (225), einen dem Taktpulsgenerator (225) nachgeordneten Zähler (236), dessen Zählerausgänge (240, 242, 244, 246) eineindeutig einer Phasenwicklung (155; $198_1$; $198_2$; 261; 263; 265; 267) des Schrittmotors (105; 207) zugeordnet sind, und eine dem einen Ausgang (246) des Zählers (236) nachgeschaltete monostabile Kippstufe (272) aufweist, welche mit dem Steuereingang des Entlüftungsventils (116) verbunden ist, wobei der Pulsabstand des Taktpulsgenerators (225) und die Kippzeit der monostabilen Kippstufe (272) unabhängig voneinander veränderbar sind und die monostabilen Kippstufen auf die abfallende Impulsflanke ansprechen.

16. Filtersteueranlage nach Anspruch 15, dadurch gekennzeichnet, daß der monostabilen Kippstufe (272) zur Steuerung des Entlüftungsventils (116) eine weitere monostabile Kippstufe (286) zur Steuerung des Hammerventils (290) nachgeschaltet ist.

**Claims**

1. A filter control apparatus for controlling the control parameters comprising the duration of the cleaning bursts and the interval between them and, if required, other control parameters, in the cyclic reserve-flow cleaning of bag filters (4, 4') in a cereal milling plant, the bag filters each being associated with a diaphragm valve (41, 42; 41', 42') adapted to be acutated fluidically for the reverse-flow cleaning, comprising

(a) a circuit (2) for the electronic inputting of timing signals and

(b) a first electromechanical transducer unit for controlling the duration of the cleaning bursts, said unit following the electronic circuit (2), being controllable by the timing signals and having a bleed valve (116),

characterised in that:

(c) the electronic circuit (2) is followed by a second electromechanical transducer unit for controlling the interval between the cleaning bursts, said second electromechanical transducer unit being controllable by the timing signals, and

(d) the electromechanical transducer units are designed for independent control of the duration of and interval between the cleaning bursts by the electronic circuit (2).

2. A filter control apparatus according to claim 1, characterised in that the second electromechanical transducer unit comprises a drum distributor (102).

3. A filter control apparatus according to claim 1 or 2, characterised in that the bleed valve (116) is disposed at the inlet (125) of the drum distributor (102).

4. A filter control apparatus according to claim 2 or 3, characterised in that each diaphragm valve (41, 42; 41', 42') is preceded by a pilot valve (40; 40') and is connected to an outlet (134; 134'; 213; 214) of the drum distributor (102; 207), there preferably being two to four pilot valves (40; 40') connected to a common outlet (134; 134'; 213; 214) of the drum distributor (102; 207).

5. A filter control apparatus according to any one of claims 2 to 4, characterised in that the second electromechanical transducer unit has a stepping motor (105; 207) connected to the arm (130; 192) of the drum distributor (102; 207) to drive the same, said motor preferably being connected to the arm (130) via a reduction gear (106, 107, 108), more particularly with a variable reduction ratio.

6. A filter control apparatus according to claim 5, characterised in that the stepping motor (105) and the drum distributor (102) are disposed in axis-parallel relationship and the stepping motor (105) is swingable (138; 138') in a plane at right angles to the axes (109, 145), preferably through a range of about 15°.

7. A filter control apparatus according to any one of claims 2 to 5, characterised in that the drum distributor (207) is itself constructed as a stepping motor (207).

8. A filter control apparatus according to any one of claims 2 to 7, characterised in that the rotary shaft (109; 191) of the drum distributor (102; 207) is mounted in ball bearings (110; 110') and the latter bear in pressure-tight relationship against the wall of an axial bore (124) in the drum distributor block (127) via O-rings (111; 111').

9. A filter control apparatus according to any one of claims 5 to 8, characterised in that the stepping motor (105; 207), the drum distributor (102; 207) and the bleed valve (116) are combined to form a first physical unit (1) and the electronic circuit (2) is combined to form a second physical unit.

10. A filter control apparatus according to any one of claims 1 to 9, characterised in that the interval of time between two actuations of the valve is adjustable in the range from 0.5 s to 10 minutes, more particularly in the range from 2 s to 100 s and the duration of the valve actuation is adjustable in the range from 30 ms to 1 s, more particularly in the range from 30 ms to 150 ms.

11. A filter control apparatus according to any one of claims 1 to 10, characterised in that the bleed valve (116) is in the form of an electropneumatic valve and is preferably closed when in the dead state.

12. A filter control apparatus according to any one of claims 1 to 11, characterised in that the electromechanical transducer units are surrounded by a pressuretight sealed housing (101, 128) filled with an inert gas.

13. A filter control apparatus according to any one of claims 1 to 12, characterised in that a monitoring facility for indicating each cleaning timing signal is connected to the electronic circuit (2) and/or a monitoring facility for indicating each cleaning burst carried out is connected to the bleed valve (116).

14. A filter control apparatus according to any one of claims 1 to 13, characterised in that a hammer valve (290) actuating a rapping hammer is provided as an additional electromechanical transducer unit controllable by the timing signals of the electronic circuit (2).

15. A filter control apparatus according to any one of claims 1 to 14, characterised in that the electronic circuit (2) comprises a timing pulse generator (225), a counter (236) following the timing pulse generator (225) and having outputs (240, 242, 244, 246), there being a one-to-one correlation between the counter outputs (240, 242, 244, 246) and the phase windings (155; 198$_1$; 198$_2$; 261; 263; 265; 267) of the stepping motor (105; 207), and a monostable trigger stage (272) which follows one output (246) of the counter (236) and is connected to the control input of the bleed valve (116), the interval between the pulses of the timing pulse generator (225) and the trigger time of the monostable trigger stage (272) being variable independently of one another and the monostable trigger stages responding to the falling pulse flank.

16. A filter control apparatus according to claim 15, characterised in that the monostable trigger stage (272) for controlling the bleed valve (116) is followed by another monostable trigger stage (286) for controlling the hammer valve (290).

**Revendications**

1. Dispositif de commande de filtres destiné à la commande des paramètres constitués par la durée des impulsions d'insufflation et l'intervalle entre impulsions d'insufflation, et éventuellement d'autres paramètres de commande de l'insufflation cyclique à contre-courant des manches filtrantes (4, 4') d'une installation de moulin à grains, une soupape à membrane (41, 42; 41', 42') à commande fluidique étant associée respectivement aux manches filtrantes en vue de l'insufflation à contre-courant, comprenant

a) un circuit (2) pour l'émission électronique de signaux de rythme et

b) une première unité de conversion électro-mécanique montée à l'aval du circuit électronique (2) et pouvant être commandée par les signaux de rythme et comprenant une soupape de mise à l'atmosphère (116) en vue de la commande de la durée des impulsions d'insufflation,

caractérisé en ce que

c) une seconde unité de conversion électro-mécanique destinée à la commande de l'intervalle séparant les impulsions d'insufflation est montée à l'aval du circuit électronique (2) et peut être commandée par les signaux de rythme, et

d) les unités de conversion électro-mécaniques sont constituées en vue de la commande indépendante de la durée des impulsions d'insufflation et de l'intervalle séparant les impulsions d'insufflation par le circuit électronique (2).

2. Dispositif de commande de filtres selon la revendication 1, caractérisé en ce que la seconde unité de conversion électro-mécanique comprend un distributeur à tambour (102).

3. Dispositif de commande de filtres selon la revendication 1 ou 2, caractérisé en ce que la soupape de mise à l'atmosphère (116) est montée à l'entrée (125) du distributeur à tambour (102).

4. Dispositif de commande de filtres selon la revendication 2 ou 3, caractérisé en ce qu'une soupape pilote (40; 40') est montée à l'aval de chaque soupape à membrane (41, 42; 41', 42') et est reliée à une sortie (134; 134'; 213; 214) du distributeur à tambour (102; 207), de deux à quatre soupapes pilotes (40; 40') étant de préférence raccordées à une sortie commune (134; 134'; 213; 214) du distributeur à tambour (102; 207).

5. Dispositif de commande de filtres selon l'une des revendications 2 à 4, caractérisé en ce que la seconde unité de conversion électro-mécanique comprend un moteur pas-à-pas (102; 207) relié de manière à entraîner le bras (130; 192) du distributeur à tambour (102; 207), le moteur étant relié de préférence au bras (130) par l'intermédiaire d'un entraînement démultiplicateur (106, 107, 108), et en particulier d'un entraînement dont on peut choisir le rapport de démultiplication.

6. Dispositif de commande de filtres selon la revendication 5, caractérisé en ce que le moteur pas-à-pas (105) et le distributeur à tambour (102) sont montés de manière que leurs axes soient parallèles, et en ce que le moteur pas-à-pas (105) peut pivoter (en 138; 138') dans un plan perpendiculaire aux axes (109; 145), et de préférence selon un pas angulaire d'environ 15°.

7. Dispositif de commande de filtres selon l'une des revendications 2 à 5, caractérisé en ce que le distributeur à tambour (207) est constitué lui-même sous forme d'un moteur pas-à-pas (207).

8. Dispositif de commande de filtres selon l'une des revendications 2 à 7, caractérisé en ce que l'arbre de rotation (109; 191) du distributeur à tambour (102; 207) est guidé dans des roulements à billes (110; 110'), et en ce que les roulements à billes (110; 110') sont appliqués par l'intermédiaire de joints toriques (111; 111') et de façon étanche à la pression contre la paroi de l'alésage axial (124) pratiqué dans le bloc (127) du distributeur à tambour.

9. Dispositif de commande de filtres selon l'une des revendications 5 à 8, caractérisé en ce que le moteur pas-à-pas (105; 207), le distributeur à tambour (102; 207) et la soupape de mise à l'atmosphère (116) dont rassemblés en un premier élément constitutif (1) alors que le circuit électronique (2) est rassemblé en un second élément constitutif.

10. Dispositif de commande de filtres selon l'une des revendications 1 à 9, caractérisé en ce que l'intervalle de temps entre deux manoeuvres de la soupape de mise à l'atmosphère est situé dans une plage comprise entre 0,5 s et 10 min., en particulier dans une plage comprise entre 2 s et 100 s, et en ce que la durée de la manoeuvre de la soupape peut être réglée dans une plage comprise entre 30 ms et 1 s, et mieux encore entre 30 ms et 150 ms.

11. Dispositif de commande de filtres selon l'une des revendications 1 à 10, caractérisé en ce que la soupape de mise à l'atmosphère (116) est constituée sous forme d'une soupape électromagnétique et est de préférence fermée quand il n'y a pas de courant.

12. Dispositif de commande de filtres selon l'une des revendications 1 à 11, caractérisé en ce que les unités de conversion électro-mécaniques sont entourées par un carter (101; 128) fermé de façon étanche aux gaz et rempli d'un gaz inerte.

13. Dispositif de commande de filtres selon l'une des revendications 1 à 12, caractérisé en ce qu'un dispositif de contrôle prévu pour l'affichage de chaque signal de rythme d'insufflation est relié au circuit électronique (2) et/ou en ce qu'un dispositif de contrôle destiné à l'affichage de chaque impulsion d'insufflation réalisée est relié à la soupape de mise à l'atmosphère (116).

14. Dispositif de commande de filtres selon l'une des revendications 1 à 13, caractérisé en ce qu'il est prévu en tant que seconde unité de conversion électro-mécanique pouvant être commandée par les signaux de rythme du circuit électronique (2) une soupape à marteau (290) qui actionne le marteau de décrochage des poussières.

15. Dispositif de commande de filtres selon l'une des revendications 1 à 14, caractérisé en ce que le circuit électronique (2) comprend un générateur d'impulsions de rythme (225), un compteur (236) monté après le générateur d'impulsions de rythme (225) et dont les sorties de comptage (240, 242, 244, 246) sont associées respectivement à un enroulement à phases (15; $198_1$; $198_2$; 261; 263; 265; 267) du moteur pas-à-pas (105; 207), et une bascule monostable (272) montée à l'aval d'une sortie (246) du compteur (236), cette bascule étant reliée à l'entrée de commande de la soupape de mise à l'atmosphère (116), l'intervalle entre impulsions du générateur d'impulsions de rythme (225) et la durée de basculement de la bascule monostable (272) pouvant être modifiés indépendamment l'un de l'autre, et les bascules monostables réagissant au flanc tombant des impulsions.

16. Dispositif de commande de filtres selon la revendication 15, caractérisé en ce qu'une seconde bascule monostable (286) destinée à la commande de la soupape à marteau (290) est montée à l'aval de la bascule monostable (272) destinée à la commande de la soupape de mise à l'atmosphère (105).

FIG.1

FIG. 3

0 014 987

FIG.2

0 014 987

FIG.4

FIG.5

FIG.7

FIG.6